# EUROPÄISCHE PATENTSCHRIFT

(11) **EP 3 588 005 B1**
(45) Veröffentlichungstag und Bekanntmachung des Hinweises auf die Patenterteilung: **03.04.2024**
(21) Anmeldenummer: 19177190.6
(22) Anmeldetag: 29.05.2019
(51) Int. Cl.: B60Q 9/00, B60W 50/16, B62J 50/22, B62K 21/12, B62K 21/14, B62K 21/26, B62M 6/55, G01C 21/26, G01C 21/36

(54) **VERFAHREN ZUR HAPTISCHEN SIGNALERZEUGUNG FÜR EINEN FAHRER EINES ZWEIRADS, UND ZWEIRAD**
METHOD FOR HAPTIC SIGNAL GENERATION FOR A DRIVER OF A BICYCLE, AND BICYCLE
PROCÉDÉ DE GÉNÉRATION DES SIGNAUX HAPTIQUES POUR UN CONDUCTEUR D'UN DEUX ROUES, ET DEUX ROUES

(30) Priorität: 07.06.2018 DE 102018209048
(43) Veröffentlichungstag der Anmeldung: 01.01.2020
(73) Patentinhaber: Robert Bosch GmbH, 70442 Stuttgart (DE)
(72) Erfinder: Moia, Alessandro, 71088 Holzgerlingen (DE); Dackermann, Tim, 72072 Tuebingen (DE)

(56) Entgegenhaltungen:
- WO-A1-2018/047604
- DE-A1-102015 215 527
- DE-U1-202015 102 562
- US-A1- 2013 021 144

## Beschreibung

Die vorliegende Erfindung betrifft ein Verfahren zur haptischen Signalerzeugung für einen Fahrer eines Zweirads, wobei das Zweirad einen Lenker aufweist.

### Stand der Technik

Die Dokumente DE 20 2015 102 562 U1 und DE 10 2015 215527 A1 offenbaren eine Navigationsvorrichtung für ein Zweirad zum Befestigen in einem Lenkerrohr.

Nachteilig an den bekannten haptischen Signalgebeverfahren ist, dass eine erzeugte Vibration beispielsweise aufgrund eines unebenen Fahrbahnuntergrunds durch andere Vibrationen überlagert wird. Des Weiteren wird die erzeugte Schwingung durch ein Lenkerrohr von einer Lenkerseite an die andere Lenkerseite übertragen, wodurch Fehlinterpretationen erfolgen können.

Die Aufgabe der vorliegenden Erfindung ist es, die Erkennbarkeit eines haptischen Signals für einen Fahrer eines Zweirads zu verbessern.

### Offenbarung der Erfindung

Die vorliegende Aufgabe wird gemäß der unabhängigen Ansprüche 1 und 3 gelöst.

Die vorliegende Erfindung betrifft ein Verfahren zur haptischen Signalerzeugung für einen Fahrer eines Zweirads, wobei das Zweirad einen Lenker aufweist. Insbesondere ist das Zweirad ein Fahrrad, besonders bevorzugt ein Elektrofahrrad. Das Verfahren umfasst eine Ermittlung einer Information für den Fahrer, insbesondere eines Navigations- und/oder eines Warnhinweises. Beispielsweise wird der Navigationshinweis "rechts abbiegen" zur Fahrt entlang einer von einem Startort zu einem Zielort berechneten Route, ein Warnhinweis zu einem Stau auf der berechneten Route und/oder eine Information zu einem eingehenden Anruf auf einem Telefon mittels eines Steuergeräts ermittelt. Anschließend wird eine rechte Schwingung an einem rechten Lenkergriff und/oder eine linke Schwingung an einem linken Lenkergriff in Abhängigkeit der ermittelten Information erzeugt. Die Erzeugung der rechten und/oder linken Schwingung erfolgt jeweils insbesondere mittels eines Aktors, welcher eine mechanische Anregungsschwingung erzeugt. Der Aktor wird vorteilhafterweise mittels des Steuergeräts angesteuert. Der Aktor ist insbesondere ein Elektromotor, welcher eine mit dem Rotor nicht koaxial verbundene Masse zur Erzeugung einer Unwucht beziehungsweise Vibration beziehungsweise der jeweiligen Schwingung aufweist. Die an dem rechten Lenkergriff erzeugte rechte Schwingung und/oder die an dem linken Lenkergriff erzeugte linke Schwingung weisen jeweils eine voneinander unterschiedliche Hauptschwingungsrichtung und/oder wenigstens eine unterschiedliche vorgegebene Schwingungsfrequenz auf. Durch das Verfahren entsteht der Vorteil, dass der Fahrer die haptische Information beziehungsweise die erzeugte rechte und/oder linke Schwingung besser identifizieren kann.

In einer bevorzugten Ausgestaltung weist ein Winkel zwischen der Hauptschwingungsrichtung der rechten Schwingung und der Hauptschwingungsrichtung der linken Schwingung einen Betrag größer 45° auf, wobei der Winkel insbesondere 90° beträgt. Durch diese Ausgestaltung ist die ermittelte Information vorteilhafterweise klar für den Fahrer zu differenzieren beziehungsweise zu identifizieren.

Gemäß der Erfindung ist vorgesehen, dass eine Anpassung der Schwingungsfrequenz der rechten Schwingung und/oder der linken Schwingung in Abhängigkeit der ermittelten Information durchgeführt wird. Die Anpassung wird insbesondere durch eine veränderte Ansteuerung des Aktors beziehungsweise durch eine Veränderung einer Anregungsfrequenz der Anregungsschwingung des Aktors durchgeführt. Durch diese Ausgestaltung kann die jeweils erzeugte rechte und/oder linke Schwingung dem Fahrer komplexere und/oder klarer identifizierbare Informationsinhalte signalisieren.

Durch die Änderung der Schwingungsfrequenz wird eine Position einer maximalen Amplitude der rechten Schwingung und/oder der linken Schwingung entlang einer jeweiligen Hauptausdehnungsrichtung des jeweiligen Lenkergriffs angepasst. Die Position der maximalen Amplitude wird in Abhängigkeit der Information verändert.

Beispielsweise wird die Position der maximalen Amplitude in Richtung eines Lenkerendes des jeweiligen Lenkergriffs gemäß eines ermittelten Abbiegehinweises in diese Richtung verändert. Dadurch entsteht der Vorteil, dass die jeweilige erzeugte rechte und/oder linke Schwingung für den Fahrer als hochwertig empfunden wird.

Ebenfalls offengelegt wird ein Lenkergriff, welcher dazu eingerichtet ist, durch ein erfindungsgemäßes Verfahren zur Schwingung in einer Hauptschwingungsrichtung und/oder zur Schwingung mit mindestens einer vorgegebenen Schwingungsfrequenz angeregt zu werden. Eine Anregung zur Schwingung des Lenkergriffs in der Hauptschwingungsrichtung und/oder mit der vorgegebenen Schwingungsfrequenz erfolgt insbesondere mittels des Aktors, welcher die Anregungsschwingung erzeugt. Der Lenkergriff bietet den Vorteil, dass der Fahrer eine haptische Information gut identifizieren kann.

In einer bevorzugten Ausgestaltung weist der Lenkergriff ein Dämpfungselement zur Dämpfung einer mechanischen Schwingung auf. Dadurch entsteht der Vorteil, dass eine Schwingung des rechten oder linken Lenkergriffs nicht auf die jeweils andere Lenkerseite übertragen wird. Vorzugsweise weist das Dämpfungselement ferner ein anisotropes Material auf. Dadurch kann vorteilhafterweise der Aktor zur Erzeugung der Anregungsschwingung außerhalb des Lenkergriffs angeordnet werden, beispielsweise an einer Vibrationsvorrichtung, wobei die mittels des Aktors erzeugte Anregungsschwingung das Dämpfungselement durch das anisotropes Material in der vorgegebenen Hauptschwingungsrichtung des Lenkergriffes passiert. Dadurch wird im Gebrauch nur die Anregungsschwingung in der Hauptschwingungsrichtung an den Lenkergriff übertragen.

In einer besonders bevorzugten Ausgestaltung kann der Lenkergriff in einer Raumrichtung senkrecht zur Hauptausdehnungsrichtung des Lenkergriffs eine höhere Steifigkeit als in einer davon abweichenden Raumrichtung senkrecht zur Hauptausdehnungsrichtung des Lenkergriffs aufweisen. Die Raumrichtungen schließen zueinander insbesondere einen Winkel mit einem Betrag größer 45° ein, bevorzugt beträgt der Winkel zwischen der Raumrichtung mit der höheren Steifigkeit und der Raumrichtung mit der niedrigeren Steifigkeit 90°. Durch diese Ausgestaltung ist der Lenkergriff vorteilhafterweise dazu eingerichtet, in der Hauptschwingungsrichtung des Lenkergriffes besonders stark zu schwingen. Eine Schwingung in einer von der Hauptschwingungsrichtung abweichenden Schwingungsrichtung wird aufgrund der höheren Steifigkeit in der entsprechenden Raumrichtung reduziert. Es kann des Weiteren vorgesehen sein, dass der Lenkergriff eine variierende mechanische Steifigkeit entlang der Hauptausdehnungsrichtung des Lenkergriffs aufweist. Dadurch entsteht der Vorteil, dass eine wahrnehmbare Schwingung in der Hauptschwingungsrichtung auf einen dafür vorgesehenen Bereich des Lenkergriffs begrenzt wird.

Vorzugsweise weist der Lenkergriff mindestens eine schwingbar gelagerte Resonanzmasse auf. Dadurch kann die Amplitude der rechten und/oder linken Schwingung mittels der Anregungsschwingung verstärkt werden. In einer Weiterführung weist der Lenkergriff mindestens zwei schwingbar gelagerte Resonanzmassen mit unterschiedlichen Resonanzfrequenzen auf. Diese Resonanzmassen sind in der Weiterführung insbesondere an unterschiedlichen Positionen entlang der jeweiligen Hauptausdehnungsrichtung des jeweiligen Lenkergriffs angeordnet. Dadurch kann die Amplitude der rechten und/oder linken Schwingung an verschiedenen Positionen des Lenkergriffs verstärkt werden. Beispielsweise wird durch eine Anpassung der Anregungsfrequenz der Anregungsschwingung des Aktors die Position der maximalen Amplitude in Richtung des Lenkerendes des jeweiligen Lenkergriffs verändert beziehungsweise verschoben. Die Veränderung der Position der maximalen Amplitude erfolgt bevorzugt in Abhängigkeit der ermittelten Information, beispielsweise in Abhängigkeit eines Abbiegehinweises.

Bevorzugt weist der Lenkergriff einen elektromechanischen Aktor auf. Der Aktor ist dazu eingerichtet, eine mechanische Anregungsschwingung zum Erzeugen einer rechten und/oder linken Schwingung des Lenkergriffs beziehungsweise einer Schwingung des Lenkergriffs in der Hauptschwingungsrichtung zu erzeugen. Durch diese Ausgestaltung können die rechte und/oder linke Schwingung mit einer hohen Amplitude erzeugt werden. In einer weiteren Ausführung ist der Aktor dazu eingerichtet, die Anregungsfrequenz der Anregungsschwingung des Aktors anzupassen. Durch diese Ausführung kann die vorgegebene Schwingungsfrequenz der rechten und/oder linken Schwingung variiert werden, wodurch die jeweils erzeugte rechte und/oder linke Schwingung dem Fahrer komplexere und/oder klarer identifizierbare Informationsinhalte signalisiert.

Ebenfalls offengelegt wird eine Vibrationsvorrichtung für ein Zweirad. Die Vibrationsvorrichtung weist einen elektromechanischen Aktor zur Erzeugung einer mechanischen Anregungsschwingung auf. Die Vibrationsvorrichtung ist dazu eingerichtet, an einem Lenker und/oder an einem Vorbau des Lenkers des Zweirads angeordnet zu werden, insbesondere an einer Halterung eines Steuergeräts eines Elektrofahrrads als Zweirad. Ferner ist die Vibrationsvorrichtung dazu eingerichtet, eine mittels des elektromechanischen Aktors erzeugte Anregungsschwingung auf den Lenker zu übertragen, wobei diese Anregungsschwingung dazu eingerichtet ist, die rechte Schwingung und/oder die linke Schwingung zu erzeugen, wobei die erzeugte rechte Schwingung und/oder die erzeugte linke Schwingung eine unterschiedliche Hauptschwingungsrichtung und/oder wenigstens eine unterschiedliche vorgegebene Schwingungsfrequenz aufweisen. In einer weiterführenden Ausgestaltung ist der elektromechanische Aktor der Vibrationsvorrichtung dazu eingerichtet, die Anregungsfrequenz der erzeugten Anregungsschwingung anzupassen.

Ebenfalls offengelegt werden ein Lenker beziehungsweise ein Lenkerrohr beziehungsweise eine Lenkstange. Der Lenker beziehungsweise die Lenkstange weist am rechten Lenkerende und/oder am linken Lenkerende beziehungsweise an einer rechten Lenkerseite und/oder an einer linken Lenkerseite mindestens eine asymmetrische mechanische Eigenschaft auf. Der Lenker ist dazu eingerichtet, durch ein erfindungsgemäßes Verfahren zu einer mechanischen rechten Schwingung am rechten Lenkerende und/oder einer mechanischen linken Schwingung am linken Lenkerende angeregt zu werden, wobei die erzeugte rechte Schwingung und/oder die erzeugte linke Schwingung eine unterschiedliche Hauptschwingungsrichtung und/oder eine unterschiedliche vorgegebene Schwingungsfrequenz aufweisen.

In einer besonders bevorzugten Ausgestaltung des Lenkers beziehungsweise der Lenkstange unterscheidet sich eine mechanische Steifigkeit des Lenkers am rechten Lenkerende in mindestens einer Raumrichtung von einer mechanischen Steifigkeit des Lenkers am linken Lenkerende. Somit ist der Lenker vorzugsweise an dem rechten Lenkerende und/oder dem linken Lenkerende dazu eingerichtet, in der jeweiligen Hauptschwingungsrichtung stärker als in der Hauptschwingungsrichtung des jeweils anderen Lenkerendes zu schwingen. Dadurch ist vorteilhafterweise eine erzeugte Anregungsschwingung beziehungsweise eine rechte und/oder linke Schwingung an einem rechten und/oder linken Lenkergriff für den Fahrer gut wahrnehmbar und der Fahrer kann die durch die erzeugte rechte und/oder linke Schwingung übermittelte Information klar identifizieren.

In einer anderen Ausführung des Lenkers weist der Lenker beziehungsweise die Lenkstange am rechten Lenkerende und/oder am linken Lenkerende mindestens eine Resonanzmasse auf. Die Resonanzmasse weist insbesondere eine Resonanzfrequenz auf, welche bevorzugt eine vorgegebene Schwingungsfrequenz des rechten Lenkerende und/oder des linken Lenkerendes definiert. Dadurch entsteht der Vorteil, dass eine rechte und/oder linke Schwingung mittels eines zentral am Lenker angeordneten Aktors, beispielsweise mittels der Vibrationsvorrichtung, erzeugt und/oder die erzeugte rechte und/oder linke Schwingung verstärkt werden kann.

In einer weiteren Ausgestaltung weist der Lenker beziehungsweise die Lenkstange am rechten Lenkerende und/oder am linken Lenkerende ein Dämpfungselement zur Dämpfung einer mechanischen Schwingung auf, wobei das Dämpfungselement insbesondere ein anisotropes Material umfasst.

In einer anderen Weiterführung kann es vorgesehen sein, dass der Lenker beziehungsweise die Lenkstange am rechten Lenkerende ein erstes Material und am linken Lenkerende ein zweites Material aufweist. Das erste Material und das zweite Material weisen eine voneinander unterschiedliche Masse auf. Beispielsweise umfasst das erste Material am rechten Lenkergriff Aluminium und das zweite Material am linken Lenkergriff ein Polymer, Holz oder Kork. Dadurch entsteht der Vorteil, dass sich die Schwingungseigenschaften des Lenkers beziehungsweise der Lenkstange am rechten Lenkerende und am linken Lenkerende voneinander für den Fahrer wahrnehmbar unterscheiden.

Ebenfalls offengelegt wird ein Steuergerät, welches dazu eingerichtet ist, ein erfindungsgemäßes Verfahren durchzuführen. Das Steuergerät kann vorzugsweise die Vibrationsvorrichtung umfassen.

Die Erfindung betrifft darüber hinaus auch das Zweirad mit einem erfindungsgemäßen Lenker beziehungsweise der Lenkstange und/oder mindestens einem erfindungsgemäßen Lenkergriff.

Weitere Vorteile ergeben sich aus der nachfolgenden Beschreibung von Ausführungsbeispielen mit Bezug zu den Figuren.
- Figur 1:: Elektrofahrrad als Zweirad
- Figur 2:: Ablaufdiagramm eines erfindungsgemäßen Verfahrens
- Figur 3:: Steuergerät
- Figur 4:: Lenker eines Zweirads mit Lenkergriffen
- Figur 5:: Lenker beziehungsweise Lenkstange
- Figur 6:: weitere Ausführung eines Lenkers, perspektivisch
- Figur 7:: Veränderung einer Position der maximalen Amplitude einer Schwingung an einem Lenkergriff

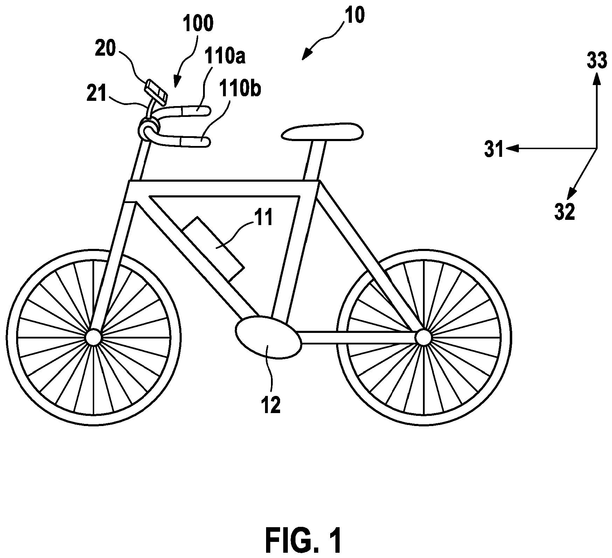

In Figur 1 ist ein Elektrofahrrad mit einem Steuergerät 20 sowie einem Batteriemodul 11 zur elektrischen Versorgung einer Antriebseinheit 12 als Zweirad 10 dargestellt. Das Zweirad 10 weist einen Lenker 100 auf, welcher eine Lenkstange und einen rechten Lenkergriff 110a und einen linken Lenkergriff 110b umfasst. Das Steuergerät 20 ist ebenfalls am Lenker 100 mittels einer Halterung 21 des Steuergeräts 20 angeordnet.

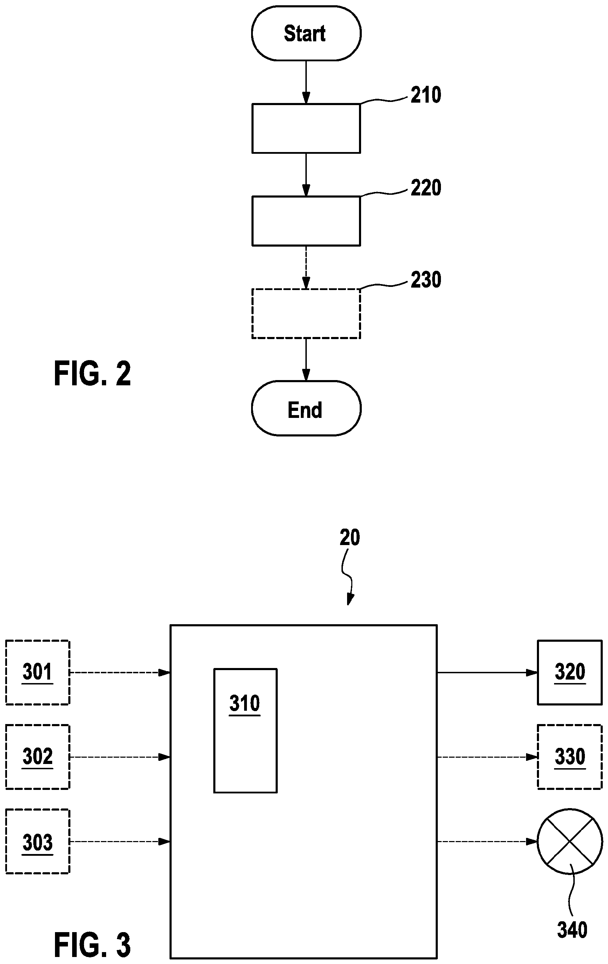

In Figur 2 ist ein Ablaufdiagramm eines erfindungsgemäßen Verfahrens als Blockschaltbild dargestellt. Das Verfahren beginnt mit einer Ermittlung 210 einer Information für den Fahrer, insbesondere mittels des Steuergeräts 20, wobei die Information beispielsweise einen Navigations- und/oder einen Warnhinweis umfasst. Beispielsweise wird mittels des Steuergeräts 20 eine Navigationssoftware ausgeführt, welche einen Navigationshinweis zur Führung des Zweirads entlang einer berechneten Fahrtroute von einem Startort zu einem Zielort ermittelt, beispielsweise wird ein Abbiegehinweis ermittelt. Anschließend wird im Schritt 220 eine mechanische rechte Schwingung am rechten Lenkergriff 110a und/oder eine mechanische linke Schwingung am linken Lenkergriff 110b in Abhängigkeit der ermittelten Information erzeugt. Beispielsweise wird eine rechte Schwingung am rechten Lenkergriff 110a zur Anzeige eines Abbiegehinweises "rechts abbiegen" oder eine linke Schwingung am linken Lenkergriff 110b zur Anzeige eines Abbiegehinweises "links abbiegen" erzeugt. Dadurch kann ein Fahrer des Zweirads 10 seine Aufmerksamkeit weiterhin auf eine visuelle Erfassung der Umgebung richten. Mit anderen Worten wird der Fahrer nicht visuell durch eine Überprüfung beispielsweise einer visuellen Anzeige an einem Display des Steuergeräts 20 abgelenkt, wodurch beispielsweise Unfälle mit anderen Fahrzeugen und/oder Hindernissen resultieren können. Die im Schritt 220 erzeugte rechte Schwingung und/oder die erzeugte linke Schwingung weisen eine unterschiedliche Hauptschwingungsrichtung und/oder wenigstens eine unterschiedliche vorgegebene Schwingungsfrequenz auf. Es ist vorzugsweise vorgesehen, dass ein Winkel zwischen der Hauptschwingungsrichtung der rechten Schwingung und der Hauptschwingungsrichtung 90° beträgt. Beispielsweise weist der rechte Lenkergriff 110a eine verstärkte Schwingfähigkeit in Längsrichtung 31 des Zweirads 10 und der linke Lenkergriff 110b eine verstärkte Schwingfähigkeit in Querrichtung 32 des Zweirads 10 oder in Richtung 33 der Hochachse des Zweirads auf. Dadurch kann der Zweiradfahrer trotz einer möglichen Übertragung der Schwingung auf die andere Lenkerseite durch den Lenker beziehungsweise die Lenkstange die ermittelte Information klar identifizieren, da durch die erzeugte Schwingung nur ein Lenkergriff spürbar schwingt. Alternativ oder zusätzlich zur rechten und/oder linken Schwingung in unterschiedlichen Hauptschwingungsrichtungen kann es, wie oben beschrieben, vorgesehen sein, dass die rechte Schwingung und/oder die erzeugte linke Schwingung wenigstens eine unterschiedliche vorgegebene Schwingungsfrequenz aufweisen. Beispielsweise wird am rechten Lenkergriff 110a eine rechte Schwingung mit einer höheren Schwingungsfrequenz als der linken Schwingung am linken Lenkergriff 110b erzeugt. Es kann optional in einem weiteren Verfahrensschritt 230 vorgesehen sein, dass eine Anpassung der vorgegebenen Schwingungsfrequenz der rechten Schwingung und/oder der linken Schwingung in Abhängigkeit der ermittelten Information durchgeführt wird. Beispielsweise kann eine zunehmende Schwingungsfrequenz an einem rechten Lenkergriff als Information einen Abbiegehinweis oder einen eingehenden Anruf an einem durch eine Funkverbindung, beispielsweise eine Bluetooth-Funkverbindung, verbundenen Telefon repräsentieren. Durch die im Schritt 230 erfolgte Änderung der vorgegebenen Schwingungsfrequenz kann des Weiteren eine Position einer maximalen Amplitude der rechten Schwingung und/oder der linken Schwingung entlang einer jeweiligen Hauptausdehnungsrichtung des jeweiligen Lenkergriffs 110a, 110b angepasst werden.

In Figur 3 ist ein Steuergerät 20 dargestellt. Das Steuergerät 20 erfasst optional Ortskoordinaten, beispielsweise durch einen Sensor 301 zu einem globalen Navigationssatellitensystem, eine Geschwindigkeit des Zweirads 10 mittels eines Geschwindigkeitssensors 302 und/oder einen Abstand zwischen dem Zweirad 10 und Objekten in der Umgebung mittels eines Abstandssensors 303, wobei der Abstandssensor 303 beispielsweise eine Kamera oder ein Ultraschallsensor sein kann. Das Steuergerät 20 ermittelt mittels der Recheneinheit 310 eine Information. Die Information wird insbesondere in Abhängigkeit der erfassten Ortskoordinaten, der erfassten Geschwindigkeit und/oder der erfassten Abstände ermittelt, wobei die Information bevorzugt ein Navigationshinweis und/oder ein Warnhinweis ist. Das Steuergerät 20 steuert anschließend in Abhängigkeit der ermittelten Information mindestens einen Aktor 320, welcher am Lenker des Zweirads 10 angeordnet ist, zur Erzeugung einer rechten und/oder linken Schwingung beziehungsweise Vibration an. Dieser Aktor ist beispielsweise in dem rechten Lenkergriff 110a und/oder dem linken Lenkergriff 110b und/oder in einer Vibrationsvorrichtung angeordnet. Es kann vorgesehen sein, dass sowohl der rechte Lenkergriff 110a als auch der linke Lenkergriff 110b jeweils einen in Abhängigkeit der ermittelten Information ansteuerbaren Aktor 320 aufweisen. Das Steuergerät 20 kann darüber hinaus mindestens einen weiteren Aktor 330 in Abhängigkeit der ermittelten Information ansteuern, beispielsweise können durch die Ansteuerung von mindestens zwei Aktoren zwei unterschiedliche Schwingungsfrequenzen gleichzeitig erzeugt werden. Es kann vorgesehen sein, dass die ermittelte Information beispielsweise auch auf einem Display 340 des Steuergeräts 20 angezeigt wird.

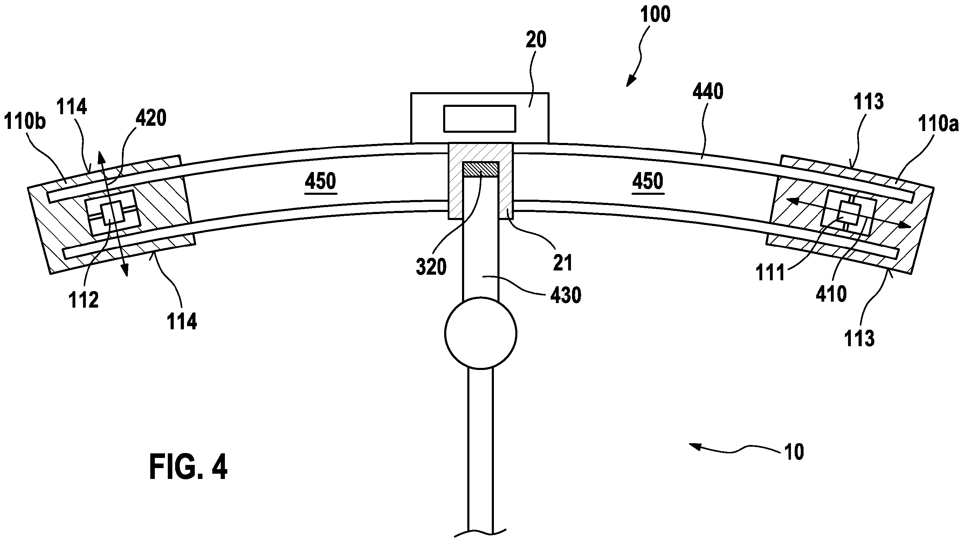

In Figur 4 ist ein Lenker 100 eines Zweirads 10 beziehungsweise eine Lenkstange 440 mit einem rechten Lenkergriff 110a und einem linken Lenkergriff 110b dargestellt. Der Lenker 100 beziehungsweise die Lenkstange 440 ist mittels eines Vorbaus 430 an dem Zweirad 10 fixiert. An dem Lenker 100 ist des Weiteren eine Halterung 21 für das Steuergerät 20 sowie das Steuergerät 20 mit einem Display dargestellt. An oder in der Halterung 21 des Steuergeräts 21 ist der Aktor 320 angeordnet, welcher dazu eingerichtet ist, eine Anregungsschwingung mit einer Anregungsfrequenz in Abhängigkeit der ermittelten Information zu erzeugen und diese Anregungsschwingung auf den Lenker 100 beziehungsweise die Lenkstange 440 zu übertragen. Der Aktor 320 kann alternativ an oder in einer separaten Vibrationsvorrichtung angeordnet sein, welche beispielsweise am Lenker 100 beziehungsweise an dem Vorbau 430 angeordnet wird. Der rechte Lenkergriff 110a und der linke Lenkergriff 110b sind ferner in unterschiedlichen Hauptschwingungsrichtungen 410 und 420 verstärkt schwingfähig. Dies wird in diesem Ausführungsbeispiel dadurch erreicht, dass der rechte Lenkergriff 110a eine in der Hauptschwingungsrichtung 410 schwingbar gelagerte Resonanzmasse 111 und der linke Lenkergriff 110b eine in der Hauptschwingungsrichtung 420 schwingbar gelagerte Resonanzmasse 112 mit einer aufweisen. Die Resonanzmassen weisen unterschiedliche Massen beziehungsweise Gewichte und damit unterschiedliche Resonanzfrequenzen auf. Die Resonanzmassen 111 und 112 sind jeweils im Inneren des rechten Lenkergriffs 110a und/oder des linken Lenkergriffs 110b angeordnet. Mit anderen Worten ist in diesem Ausführungsbeispiel die Resonanzmasse 111 des rechten Lenkergriffs 110a und/oder die Resonanzmasse 112 des linken Lenkergriffs 110b bei der Montage in einem innerhalb der Lenkstange 440 beziehungsweise des Lenkrohres liegenden Hohlraum 450 angeordnet. Der Aktor 320 erzeugt eine Anregungsschwingung mit einer Anregungsfrequenz in Abhängigkeit der ermittelten Information, wodurch eine verstärkte rechte Schwingung der Resonanzmasse 111 des rechten Lenkergriffs 110a und/oder eine verstärke linke Schwingung der Resonanzmasse 112 des linken Lenkergriffs 110a in die jeweilige Hauptschwingungsrichtung des jeweiligen Lenkergriffs 110a und/oder 110b verursacht wird. Die rechte Schwingung der Resonanzmasse 111 des rechten Lenkergriffs 110a wird an eine Grifffläche 113 des rechten Lenkergriffs 110a und/oder die linke Schwingung der Resonanzmasse 112 wird an eine Grifffläche 114 des linken Lenkergriffs 110a übertragen, wodurch die rechte Schwingung und/oder die linke Schwingung für den Fahrer des Zweirads wahrnehmbar und klar identifizierbar erzeugt wird.

Alternativ zur Anordnung des Aktors 320 an einer Halterung des Steuergeräts 320 gemäß Figur 4 können der rechte Lenkergriff 110a und der linken Lenkergriff 110b jeweils einen Aktor 320 aufweisen (nicht dargestellt), wobei der Aktor 320 des rechten Lenkergriffs 110a dazu eingerichtet ist, gegenüber dem Aktor 320 des linken Lenkergriffs 110b in einer anderen Hauptschwingungsrichtung und/oder mit einer anderen vorgegebenen Schwingungsfrequenz zu schwingen. In diesem Ausführungsbeispiel kann es vorgesehen sein, dass der rechte Lenkergriff 110a und/oder der linke Lenkergriff 110b nur optional eine Resonanzmasse 111, 112 aufweisen.

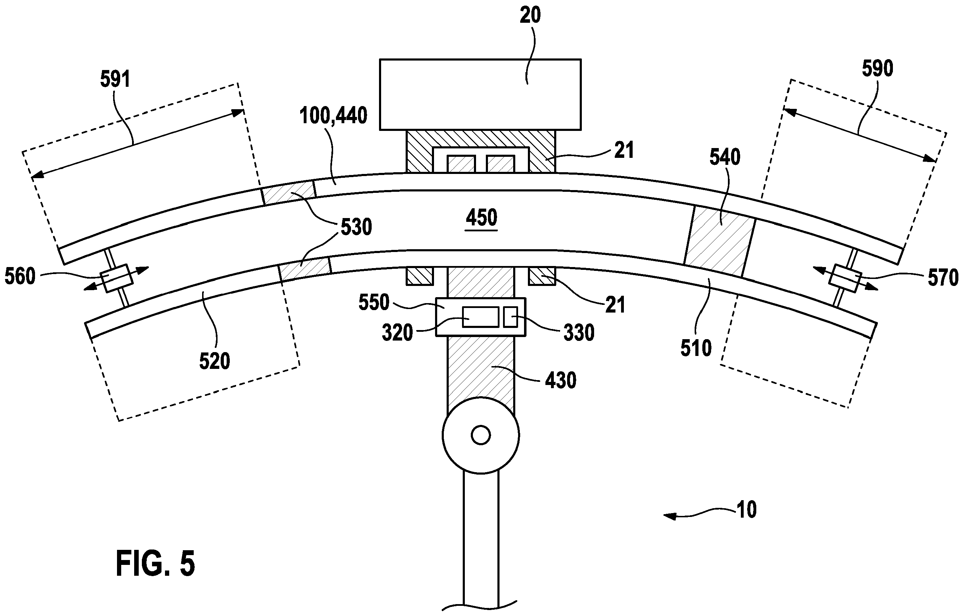

In Figur 5 ist ein Lenker 100 beziehungsweise eine Lenkstange 440 beziehungsweise ein Lenkerrohr dargestellt. Der Lenker 100 weist einen Hohlraum 450, wie in Figur 4, auf. Ein erster Bereich 510 des Lenkers 100 umfasst ein erstes Material, beispielsweise Aluminium. Ein zweiter Bereich 520 des Lenkers 100 umfasst ein zweites Material, beispielsweise ein Polymer, Holz oder Kork. Optional kann zwischen dem ersten Bereich 510 und dem zweiten Bereich 520 ein Dämpfungselement 530 angeordnet sein, wobei das Dämpfungselement 530 insbesondere anisotrope Schwingungseigenschaften aufweist. Des Weiteren kann optional ein weiteres Dämpfungselement 540 zur Absorption von mechanischen Schwingungen im Hohlraum 450 des Lenkers 100 angeordnet sein. Das Dämpfungselement 540 weist ebenfalls insbesondere anisotrope Schwingungseigenschaften auf. Das am Lenker 100 angeordnete Steuergerät 20 ermittelt eine Information, beispielsweise wird ein Navigationshinweis zum Abbiegen als Information ermittelt. Die ermittelte Information kann mittels eines Kabels oder mittels einer Funkverbindung, beispielsweise mittels einer Bluetooth-Verbindung, an eine Vibrationsvorrichtung 550 übertragen werden, wobei die Vibrationsvorrichtung 550 den Aktor 320 und den optionalen Aktor 330 umfasst. Der Aktor 320 und der optionale Aktor 330 werden in Abhängigkeit der empfangenen Information angesteuert. Der Aktor 320 und der optionale Aktor 330 sind dazu eingerichtet, jeweils eine Anregungsschwingung mit einer Anregungsfrequenz auf den Lenker 100 zu übertragen, wobei sich die erzeugten Anregungsfrequenzen der Anregungsschwingung des Aktors 320 und des Aktors 330 bevorzugt unterscheiden. Die mindestens eine erzeugte Anregungsschwingung des Aktors 320 wird auf den Lenker 100 übertragen, wodurch eine rechte Schwingung an einem rechten Lenkerende 590 des Lenkers 100 und/oder eine linke Schwingung an einem linken Lenkerende 591 des Lenkers 100 resultiert. Durch die Bereiche 510 und 520 des Lenkers 100, welche unterschiedliche mechanische Eigenschaften beziehungsweise Schwingungsfähigkeiten aufweisen, resultiert eine unterschiedliche vorgegebene Schwingungsfrequenz der rechte Schwingung am rechten Lenkerende 590 und der linke Schwingung am linken Lenkerende 591.

Der optionale Aktor 330 kann dazu vorgesehen sein, eine zusätzliche Anregungsschwingung mit einer von der Anregungsschwingung des Aktors 320 unterschiedlichen Anregungsfrequenz zu erzeugen. Die Ansteuerung des Aktors 320 und/oder des optionalen Aktors 330 erfolgt in Abhängigkeit der Information. Dadurch können beispielsweise eine erste Resonanzmasse 570 und/oder eine zwei Resonanzmasse 560, welche optional im Hohlraum 450 des Lenkers 100 angeordnet sind, in Abhängigkeit der Information zu einer verstärkten Schwingung angeregt werden (nicht dargestellt). In dieser Ausführung werden die erzeugte rechte Schwingung am rechten Lenkerende 590 des Lenkers 100 und die erzeugte linke Schwingung am linken Lenkerende 591 des Lenkers 100 eine unterschiedliche vorgegebene Schwingungsfrequenz aufweisen.

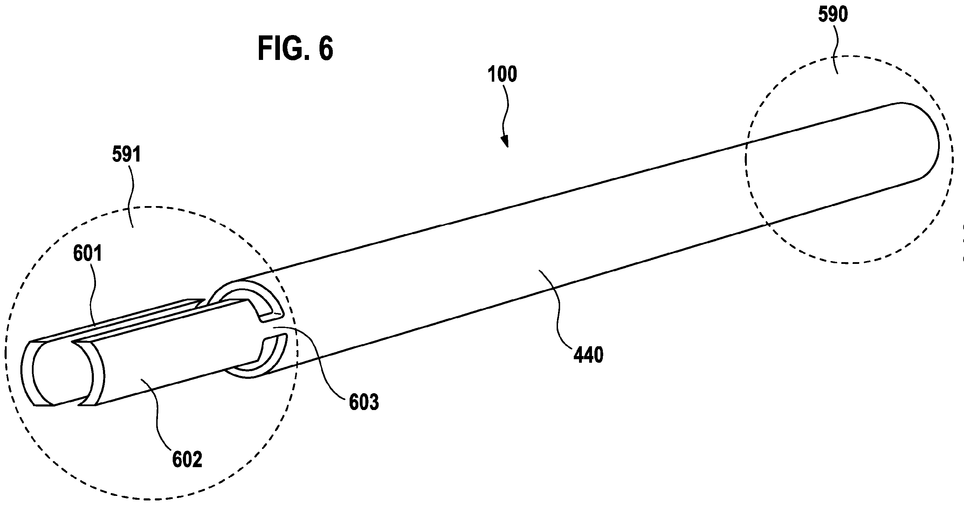

In Figur 6 ist ein Lenker 100 beziehungsweise eine Lenkstange 440 perspektivisch dargestellt, wobei der Lenker 100 an einem linken Lenkerende 591 durch einen verjüngten und/oder elastischen Bereich 603 der Lenkerstange mindestens eine schwingfähig gelagerte Resonanzmasse 601 aufweist. In diesem Ausführungsbeispiel aus Figur 6 umfasst der Lenker 100 zwei schwingfähig gelagerte Resonanzmassen 601 und 602. Die Lenkstange 440 beziehungsweise der Lenker 100 ist in diesem Beispiel ferner einstückig und weist Aluminium als Material auf. Der Lenker 100 umfasst alternativ oder zusätzlich andere Materialien, beispielsweise ein Polymer und/oder einen Faserverbundwerkstoff. Die Resonanzmassen 601 und 602 werden beispielsweise mittels des Aktor 320 der Vibrationsvorrichtung 550, mittels des Aktor 320 der Halterung 21 des Steuergeräts 20 und/oder mittels des Aktor 320 des rechten Lenkergriffs 110a und/oder mittels des Aktor 320 des linken Lenkergriffs 110b zur linken Schwingung des Lenkerendes 591 angeregt. Beispielsweise wird zur Erzeugung ein rechter Lenkergriff 110a am rechten Lenkerende 590 des Lenkers 100 angeordnet. Die erzeugte Anregungsschwingung weißt die Resonanzfrequenz der Resonanzmasse 601 und/oder 602 auf und wird durch die Lenkstange 440 beziehungsweise den Lenker 100 von dem rechten Lenkerende 590 auf das linke Lenkerende 591 übertragen, wodurch eine deutlich wahrnehmbare linke Schwingung erzeugt wird. Dabei resultiert durch die erzeugte Anregungsschwingung des Aktors 320 mit der Resonanzfrequenz der Resonanzmasse 601 bzw. 602 keine oder nur eine gedämpfte rechte Schwingung am rechten Lenkerende 590. Der Aktor 320 ist des Weiteren dazu eingerichtet, eine Anregungsschwingung mit einer von der Resonanzfrequenz der Resonanzmasse 601 bzw. 602 unterschiedlichen Anregungsfrequenz zu erzeugen. Alternativ ist ein optionaler Aktor 330 im rechten Lenkergriff 100a angeordnet, welcher die Anregungsschwingung mit einer von der Resonanzfrequenz der Resonanzmasse 601 unterschiedlichen Anregungsfrequenz erzeugt. Die erzeugte von der Resonanzfrequenz unterschiedliche Anregungsfrequenz wird bevorzugt nicht oder nur gedämpft von dem rechten Lenkerende 590 auf das linke Lenkerende 591 übertragen. Die Dämpfung der Resonanzfrequenz und/oder der von der Resonanzfrequenz unterschiedliche Anregungsfrequenz kann beispielsweise mittels eines Dämpfungselements 530 und/oder 540 erfolgen.

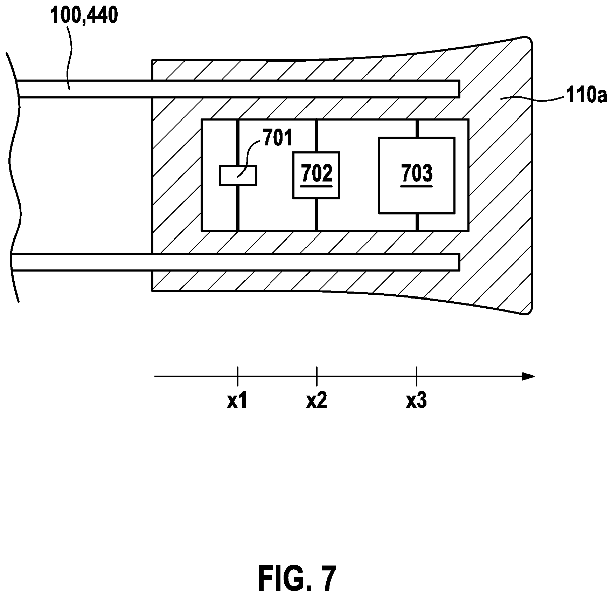

In Figur 7 ist ein rechter Lenkergriff 110a beziehungsweise linker Lenkergriff 110b dargestellt, welcher mehrere Resonanzmassen 701, 702 und 703 mit jeweils unterschiedlicher Masse beziehungsweise Gewicht und unterschiedlichen Resonanzfrequenzen aufweist. Demnach können sowohl ein rechter Lenkergriff 110a als auch ein linker Lenkergriff 110b (in Figur 7 nicht dargestellt) jeweils mehrere Resonanzmassen 701, 702 und 703 mit jeweils unterschiedlicher Masse und/oder mit unterschiedlichen Resonanzfrequenzen und/oder mit einer rechten oder linken Schwingungsrichtung aufweisen. Alternativ können die Resonanzmassen 701, 702 und 703 mit jeweils unterschiedlicher Masse und/oder mit unterschiedlichen Resonanzfrequenzen und/oder mit einer rechten oder linken Schwingungsrichtung in dem Lenkerrohr beziehungsweise der Lenkstange 440 des Lenkers 100 angeordnet sein. Durch die Anpassung 230 der Anregungsfrequenz der Anregungsschwingung des Aktors 320 in Abhängigkeit der Information kann jede der Resonanzmassen 701, 702 und 703 beispielsweise zu einer rechten Schwingung des rechten Lenkergriffs 110a angeregt werden, wobei sich die (vorgegebene) Schwingungsfrequenz der rechten Schwingung entsprechend verändert. Durch die Anpassung 230 der Anregungsfrequenz der Anregungsschwingung des Aktors 320 können also nacheinander die Resonanzmassen 701, 702 und 703 zu einer rechten Schwingung angeregt werden, wodurch die Position (x1, x2, x3) der maximalen Amplitude der rechten Schwingung verändert wird. Beispielsweise werden die Resonanzmassen 701, 702 und 703 nacheinander von links nach rechts und optional wiederholt durch die Anpassung 230 der Anregungsfrequenz der Anregungsschwingung des Aktors 320 zur rechten Schwingung angeregt, wenn als Information eine Abbiegehinweis nach rechts ermittelte wurde. Demnach kann die von dem Fahrer wahrnehmbare maximale Amplitude der rechten Schwingung von der Position x1 zu der Position x2 und zu der Position x3 verändert werden beziehungsweise wandern. Analog kann durch die Anpassung 230 der Anregungsfrequenz der Anregungsschwingung des Aktors 320 nacheinander die Resonanzmassen 701, 702 und 703 zu einer linken Schwingung angeregt werden, wodurch die Position (x1, x2, x3) der maximalen Amplitude der linken Schwingung verändert wird. Beispielsweise werden die Resonanzmassen 701, 702 und 703 nacheinander von rechts nach links und optional wiederholt durch die Anpassung 230 der Anregungsfrequenz der Anregungsschwingung des Aktors 320 zur linken Schwingung angeregt, wenn als Information eine Abbiegehinweis nach links ermittelte wurde.

## Patentansprüche

1. Verfahren zur haptischen Signalerzeugung für einen Fahrer eines Zweirads (10), wobei das Zweirad (10) einen Lenker (100) aufweist, umfassend die Verfahrensschritte
• Ermittlung (210) einer Information für den Fahrer, insbesondere eines Navigations- und/oder eines Warnhinweises,
• Erzeugung (220) mindestens einer erzeugbaren mechanischen rechten Schwingung an einem rechten Lenkergriff (110a) des Lenkers (100) und/oder einer erzeugbaren mechanischen linken Schwingung an einem linken Lenkergriff (110b) des Lenkers (100) in Abhängigkeit der ermittelten Information, wobei die erzeugbare rechte Schwingung und die erzeugbare linke Schwingung wenigstens eine unterschiedliche vorgegebene Schwingungsfrequenz aufweisen, und
• Anpassung (230) der vorgegebenen Schwingungsfrequenz der rechten Schwingung und/oder der linken Schwingung in Abhängigkeit der ermittelten Information,
**dadurch gekennzeichnet, dass**
die Anpassung (230) der vorgegebenen Schwingungsfrequenz eine Position (x1, x2, x3) einer maximalen Amplitude der rechten Schwingung und/oder der linken Schwingung entlang einer jeweiligen Hauptausdehnungsrichtung des jeweiligen Lenkergriffs (110a, 110b) anpasst.

2. Verfahren nach Anspruch 1, **dadurch gekennzeichnet, dass** ein Winkel zwischen der Hauptschwingungsrichtung der rechten Schwingung und der Hauptschwingungsrichtung der linken Schwingung einen Betrag größer 45° aufweist, wobei der Winkel insbesondere 90° beträgt.

3. Zweirad (10) mit einem Lenker (100), wobei der Lenker einen rechten Lenkergriff (110a) und einen linken Lenkergriff (110b) aufweist, wobei die Lenkergriffe dazu eingerichtet sind, durch ein Verfahren nach einer der Ansprüche 1-2 zu einer Schwingung mit einer vorgegebenen Schwingungsfrequenz angeregt zu werden, und wobei das Zweirad (10) ein Steuergerät (20) aufweist, wobei das Steuergerät (20) dazu eingerichtet ist, ein Verfahren nach einem der Ansprüche 1 oder 2 zur Steuerung des Zweirads (10) durchzuführen.

4. Zweirad nach Anspruch 3, **dadurch gekennzeichnet, dass** der rechte Lenkergriff (110a) und der linke Lenkergriff (110b) jeweils mindestens eine schwingbar gelagerte Resonanzmasse (111, 112, 701, 702, 703) aufweist, insbesondere umfasst der rechte Lenkergriff (110a) und der linke Lenkergriff (110b) jeweils wenigstens zwei Resonanzmassen (111, 112, 701, 702, 703) mit unterschiedlicher Resonanzfrequenz.

5. Zweirad nach Anspruch 3 oder 4, **dadurch gekennzeichnet, dass** der rechte Lenkergriff (110a) und der linke Lenkergriff (110b) jeweils ein Dämpfungselement (530, 540) zur Dämpfung einer mechanischen Schwingung aufweist, wobei das Dämpfungselement (530, 540) insbesondere ein anisotropes Material umfasst.

6. Zweirad nach einem der Ansprüche 3 bis 5, **dadurch gekennzeichnet, dass** der rechte Lenkergriff (110a) und der linke Lenkergriff (110b) jeweils in einer Raumrichtung senkrecht zur Hauptausdehnungsrichtung des jeweiligen Lenkergriffs (110a, 110b) eine höhere Steifigkeit als in einer davon abweichenden Raumrichtung senkrecht zur Hauptausdehnungsrichtung des jeweiligen Lenkergriffs (110a, 110b) aufweist, wobei die Raumrichtungen zueinander insbesondere einen Winkel mit einem Betrag größer 45° einschließen, bevorzugt beträgt der Winkel zwischen der Raumrichtung mit der höheren Steifigkeit und der Raumrichtung mit der niedrigeren Steifigkeit 90°.

7. Zweirad nach einem der Ansprüche 3 bis 6, **dadurch gekennzeichnet, dass** der rechte Lenkergriff (110a) und der linke Lenkergriff (110b) jeweils einen elektromechanischen Aktor (320, 330) aufweist, wobei der Aktor (320, 330) dazu eingerichtet ist, eine mechanische Anregungsschwingung in der Hauptschwingungsrichtung und/oder mit der vorgegebenen Schwingungsfrequenz zu erzeugen.

8. Zweirad nach einem der Ansprüche 3 bis 7, **dadurch gekennzeichnet, dass** der Lenker (100)
• an einem rechten Lenkerende (590) und an einem linken Lenkerende (591) mindestens eine asymmetrische mechanische Eigenschaft aufweist, und
• Lenkerende und/oder am linken Lenkerende mindestens eine Resonanzmasse (560, 570, 601, 602) aufweist.

9. Zweirad nach Anspruch 8, **dadurch gekennzeichnet, dass** der Lenker (100) eine mechanische Steifigkeit am rechten Lenkerende aufweist, welche sich in mindestens einer Raumrichtung von einer mechanischen Steifigkeit des Lenkers (100) am linken Lenkerende unterscheidet.

10. Zweirad nach einem der Ansprüche 8 bis 9, **dadurch gekennzeichnet, dass** der Lenker am rechten Lenkerende und/oder am linken Lenkerende ein Dämpfungselement (530, 540) zur Dämpfung einer mechanischen Schwingung aufweist, wobei das Dämpfungselement (530, 540) insbesondere ein anisotropes Material umfasst.

11. Zweirad nach einem der Ansprüche 8 bis 10, **dadurch gekennzeichnet, dass** der Lenker in einem ersten Bereich (510) ein erstes Material und in einem zweiten Bereich (520) ein zweites Material aufweist, wobei das erste Material und des zweite Material eine voneinander unterschiedliche Masse aufweisen.

## Claims

1. Method for haptic signal generation for a rider of a two-wheeled vehicle (10), wherein the two-wheeled vehicle (10) has a handlebar (100), comprising the method steps of
• determining (210) information for the rider, in particular a navigation and/or a warning message,
• generating (220) at least one generatable mechanical right-hand-side vibration on a right-hand-side handlebar grip (110a) of the handlebar (100) and/or a generatable mechanical left-hand-side vibration on a left-hand-side handlebar grip (110b) of the handlebar (100) depending on the determined information, wherein the generatable right-hand-side vibration and the generatable left-hand-side vibration have at least a different specified vibration frequency, and
• adapting (230) the specified vibration frequency of the right-hand-side vibration and/or the left-hand-side vibration depending on the determined information, **characterized in that**
adapting (230) the specified vibration frequency adapts a position (x1, x2, x3) of a maximum amplitude of the right-hand-side vibration and/or the left-hand-side vibration along a respective main direction of extent of the respective handlebar grip (110a, 110b).

2. Method according to Claim 1, **characterized in that** an angle between the main direction of vibration of the right-hand-side vibration and the main direction of vibration of the left-hand-side vibration has a magnitude of greater than 45°, wherein the angle is, in particular, 90°.

3. Two-wheeled vehicle (10) having a handlebar (100), wherein the handlebar has a right-hand-side handlebar grip (110a) and a left-hand-side handlebar grip (110b), wherein the handlebar grips are designed to be excited to vibrate at a specified vibration frequency by a method according to either of Claims 1 and 2, and wherein the two-wheeled vehicle (10) has a controller (20), wherein the controller (20) is designed to carry out a method according to either of Claims 1 and 2 for controlling the two-wheeled vehicle (10).

4. Two-wheeled vehicle according to Claim 3, **characterized in that** the right-hand-side handlebar grip (110a) and the left-hand-side handlebar grip (110b) each have at least one resonant mass (111, 112, 701, 702, 703) which is mounted such that it can vibrate, in particular the right-hand-side handlebar grip (110a) and the left-hand-side handlebar grip (110b) each comprise at least two resonant masses (111, 112, 701, 702, 703) with different resonant frequencies.

5. Two-wheeled vehicle according to Claim 3 or 4, **characterized in that** the right-hand-side handlebar grip (110a) and the left-hand-side handlebar grip (110b) each have a damping element (530, 540) for damping mechanical vibrations, wherein the damping element (530, 540) comprises an anisotropic material in particular.

6. Two-wheeled vehicle according to any of Claims 3 to 5, **characterized in that** the right-hand-side handlebar grip (110a) and the left-hand-side handlebar grip (110b) each have a greater stiffness in a spatial direction perpendicular to the main direction of extent of the respective handlebar grip (110a, 110b) than in a spatial direction perpendicular to the main direction of extent of the respective handlebar grip (110a, 110b) that differs from the first-mentioned spatial direction, wherein the spatial directions in particular form an angle with a magnitude of greater than 45° in relation to each other, the angle between the spatial direction with the relatively high stiffness and the spatial direction with the relatively low stiffness preferably being 90°.

7. Two-wheeled vehicle according to any of Claims 3 to 6, **characterized in that** the right-hand-side handlebar grip (110a) and the left-hand-side handlebar grip (110b) each have an electromechanical actuator (320, 330), wherein the actuator (320, 330) is designed to generate mechanical excitation vibrations in the main direction of vibration and/or at the specified vibration frequency.

8. Two-wheeled vehicle according to any of Claims 3 to 7, **characterized in that** the handlebar (100)
• has at least one asymmetrical mechanical property at a right-hand-side handlebar end (590) and at a left-hand-side handlebar end (591), and at least one resonant mass (560, 570, 601, 602) at the right-hand-side handlebar end and/or at the left-hand-side handlebar end.

9. Two-wheeled vehicle according to Claim 8, **characterized in that** the handlebar (100) has a mechanical stiffness at the right-hand-side handlebar end, this mechanical stiffness differing from a mechanical stiffness of the handlebar (100) at the left-hand-side handlebar end in at least one spatial direction.

10. Two-wheeled vehicle according to either of Claims 8 and 9, **characterized in that** the handlebar has a damping element (530, 540) for damping mechanical vibrations at the right-hand-side handlebar end and/or at the left-hand-side handlebar end, wherein the damping element (530, 540) comprises an anisotropic material in particular.

11. Two-wheeled vehicle according to any of Claims 8 to 10, **characterized in that** the handlebar contains a first material in a first region (510) and a second material in a second region (520), wherein the first material and the second material have different masses.

## Revendications

1. Procédé de génération de signaux haptiques pour un conducteur d'un deux-roues (10), le deux-roues (10) possédant un guidon (100), comprenant les étapes de
• détermination (210) d'une information pour le conducteur, notamment d'une consigne de navigation et/ou d'un avertissement,
• génération (220) d'au moins une oscillation mécanique droite pouvant être générée au niveau d'une poignée droite (110a) du guidon (100) et/ou d'une oscillation mécanique gauche pouvant être générée au niveau d'une poignée gauche (110b) du guidon (100) en fonction de l'information déterminée, l'oscillation droite pouvant être générée et l'oscillation gauche pouvant être générée présentant au moins une fréquence d'oscillation prédéfinie différente, et
• adaptation (230) de la fréquence d'oscillation prédéfinie de l'oscillation droite et/ou de l'oscillation gauche en fonction de l'information déterminée, **caractérisé en ce que**
l'adaptation (230) de la fréquence d'oscillation prédéfinie adapte une position (x1, x2, x3) d'une amplitude maximale de l'oscillation droite et/ou de l'oscillation gauche le long d'une direction d'extension principale respective de la poignée de guidon (110a, 110b) respective.

2. Procédé selon la revendication 1, **caractérisé en ce qu'**un angle entre la direction d'oscillation principale de l'oscillation droite et la direction d'oscillation principale de l'oscillation gauche présente une valeur supérieure à 45°, l'angle étant notamment de 90°.

3. Deux-roues (10) comprenant un guidon (100), le guidon possédant une poignée de guidon droite (110a) et une poignée de guidon gauche (110b), les poignées de guidon étant conçues pour être excitées par un procédé selon l'une des revendications 1 à 2 en une oscillation à une fréquence d'oscillation prédéfinie, et le deux-roues (10) possédant un contrôleur (20), le contrôleur (20) étant conçu pour mettre en œuvre un procédé selon l'une des revendications 1 ou 2 pour commander le deux-roues (10).

4. Deux-roues selon la revendication 3, **caractérisé en ce que** la poignée de guidon droite (110a) et la poignée de guidon gauche (110b) possèdent chacune au moins une masse de résonance (111, 112, 701, 702, 703) montée de manière à pouvoir osciller, en particulier la poignée de guidon droite (110a) et la poignée de guidon gauche (110b) comportent respectivement au moins deux masses de résonance (111, 112, 701, 702, 703) ayant une fréquence de résonance différente.

5. Deux-roues selon la revendication 3 ou 4, **caractérisé en ce que** la poignée de guidon droite (110a) et la poignée de guidon gauche (110b) possèdent respectivement un élément d'amortissement (530, 540) destiné à amortir une oscillation mécanique, l'élément d'amortissement (530, 540) comportant notamment un matériau anisotrope.

6. Deux-roues selon l'une des revendications 3 à 5, **caractérisé en ce que** la poignée de guidon droite (110a) et la poignée de guidon gauche (110b) présentent respectivement une rigidité plus élevée dans une direction spatiale perpendiculaire à la direction d'extension principale de la poignée de guidon (110a, 110b) respective que dans une direction spatiale différente de celle-ci, perpendiculaire à la direction d'extension principale de la poignée de guidon (110a, 110b) respective, les directions spatiales formant notamment entre elles un angle d'une valeur supérieure à 45°, l'angle entre la direction spatiale ayant la rigidité la plus élevée et la direction spatiale ayant la rigidité la plus faible étant de préférence de 90°.

7. Deux-roues selon l'une des revendications 3 à 6, **caractérisé en ce que** la poignée de guidon droite (110a) et la poignée de guidon gauche (110b) possèdent respectivement un actionneur électromécanique (320, 330), l'actionneur (320, 330) étant conçu pour générer une oscillation d'excitation mécanique dans la direction d'oscillation principale et/ou à la fréquence d'oscillation prédéfinie.

8. Deux-roues selon l'une des revendications 3 à 7, **caractérisé en ce que** le guidon (100)
• présente au moins une propriété mécanique asymétrique à une extrémité de guidon droite (590) et à une extrémité de guidon gauche (591), et possède au moins une masse de résonance (560, 570, 601, 602) à l'extrémité de guidon droite et/ou à l'extrémité de guidon gauche.

9. Deux-roues selon la revendication 8, **caractérisé en ce que** le guidon (100) présente une rigidité mécanique à l'extrémité de guidon droite qui diffère dans au moins une direction spatiale d'une rigidité mécanique du guidon (100) à l'extrémité de guidon gauche.

10. Deux-roues selon l'une des revendications 8 à 9, **caractérisé en ce que** le guidon possède, à l'extrémité de guidon droite et/ou à l'extrémité de guidon gauche, un élément d'amortissement (530, 540) destiné à amortir une oscillation mécanique, l'élément d'amortissement (530, 540) comportant notamment un matériau anisotrope.

11. Deux-roues selon l'une des revendications 8 à 10, **caractérisé en ce que** le guidon possède un premier matériau dans une première zone (510) et un deuxième matériau dans une deuxième zone (520), le premier matériau et le deuxième matériau ayant une masse différente l'un de l'autre.
